Europäisches Patentamt

European Patent Office

Office européen des brevets

(11) Veröffentlichungsnummer: **0 090 270**
**A1**

# EUROPÄISCHE PATENTANMELDUNG

(21) Anmeldenummer: 83102620.8

(22) Anmeldetag: 17.03.83

(51) Int. Cl.³: **B 23 K 23/00**

(30) Priorität: 31.03.82 DE 3211831

(43) Veröffentlichungstag der Anmeldung: 05.10.83
Patentblatt 83/40

(84) Benannte Vertragsstaaten: **AT FR GB IT NL**

(71) Anmelder: **Elektro-Thermit GmbH, Gerlingstrasse 65, D-4300 Essen (DE)**

(72) Erfinder: **Guntermann, Hans, Dr., Augener Strasse 94, D-4300 Essen 13 (DE)**
Erfinder: **Skreba, Gerhard, Hünninghausenweg 87, D-4300 Essen 14 (DE)**

(74) Vertreter: **Perret, Georg, Dr., Th. Goldschmidt AG Patentabteilung Goldschmidtstrasse 100, D-4300 Essen (DE)**

(54) **Selbstöffnender Verschluss für bei aluminothermischen Reaktionen verwendete Giesstiegel.**

(57) Selbstöffnender Verschluß für bei aluminothermischen Reaktionen verwendete Gießtiegel aus einem mechanisch beanspruchbaren, beim Erhitzen nicht gasenden, hochschmelzenden anorganischen Material, wobei der Verschluß aus einer oder mehreren Dichtungsscheibe(n) aus faserigem Aluminiumsilikat besteht, wobei das Verhältnis der Gesamtdicke der Dichtungsscheibe(n) zu ihrem Durchmesser 1:5 bis 1:1 beträgt, der Schmelzpunkt des Aluminiumsilikats $\geq$ 1650 °C ist und auf der (den) Dichtungsscheibe(n) eine Metallplatte einer Dicke von 0,1 bis 3 mm angeordnet ist.

EP 0 090 270 A1

E l e k t r o - T h e r m i t  GmbH

**Selbstöffnender Verschluß für bei aluminothermischen Reaktionen verwendete Gießtiegel**

Die Erfindung betrifft einen selbstöffnenden Verschluß für bei aluminothermischen Reaktionen verwendete Gießtiegel aus einem mechanisch beanspruchbaren, beim Erhitzen nicht gasenden, hochschmelzenden anorganischen Material.

Aluminothermische Reaktionen werden üblicherweise in einem kegelförmigen Tiegel durchgeführt, in dessen verjüngtem unteren Bereich eine Auslaufdüse auswechselbar angeordnet ist. Die Auslaufdüse muß während der Durchführung der aluminothermischen Reaktion verschlossen sein.

Die bei der aluminothermischen Reaktion entstandene Metallschmelze darf erst dann aus der Auslaufdüse abfließen, wenn sich die im wesentlichen aus Aluminiumoxid bestehende schmelzflüssige Schlacke von der Metallschmelze getrennt hat und auf dieser aufschwimmt. Erfolgt die Öffnung der Auslaufdüse zu früh, besteht die Gefahr eines fehlerhaften Gusses infolge noch unvollständiger Reaktion des aluminothermischen Gemisches oder durch noch nicht vollständig erfolgte Abtrennung der gebildeten Aluminiumoxidschlacke von der gebildeten Metallschmelze.

Die Öffnung des Verschlusses der Auslaufdüse kann entweder mechanisch oder automatisch erfolgen.

Bei dem mechanisch bewirkten Abstich bestimmt der Schweißer durch Einblick in den Gießtiegel den Zeitpunkt der vollständigen Trennung der Schlacke von der Metallschmelze und schlägt einen in die Auslaufdüse eingehängten und abgedichteten, nagelförmigen Verschlußstift nach oben. Dieser Stand der Technik ist z.B. in der DE-PS 22 30 430 beschrieben. Bei dieser Art des Abstiches des schmelzflüssigen Metalles hängt der richtig gewählte Zeitpunkt für das Öffnen der Auslaufdüse von der Erfahrung und Geschicklichkeit des Schweißers ab. Der Abstich darf aus den oben dargelegten Gründen nicht zu früh erfolgen. Er darf jedoch auch nicht zu spät vorgenommen werden, da sonst die Temperatur der Metallschmelze bereits wieder absinkt.

Zur Erhöhung der Schweißsicherheit sind Verschlüsse der Auslaufdüse bekannt, die innerhalb einer vorbestimmten Zeit von der aluminothermisch erzeugten Metallschmelze auf- und durchgeschmolzen werden. Bereits 1902 wurde in einer Broschüre der Allgemeinen Thermit-Gesellschaft mbH, Essen, ein selbstöffnender Verschluß für einen Gießtiegel beschrieben. Dabei wurde die Öffnung des Tiegels mit einem Asbestscheibchen von etwa 1/2 mm Dicke und 50 mm Durchmesser, auf das ein rundes Eisenplättchen von 3 mm Dicke und 30 mm Durchmesser gelegt wurde, verschlossen. Durch das Unterlegen des Asbestscheibchens unter die Eisenplatte wurde der sichere Verschluß bewirkt. Das schmelzflüssig erzeugte Thermiteisen durchschmilzt das Metallplättchen und die Asbestscheibe, wobei der Zeitpunkt des Durchschmelzens der Dicke des Asbestplättchens und der darüber gelegten Eisenplatte proportional ist.

An diesem Prinzip des Aufbaus eines selbstöffnenden Verschlusses hat sich bis heute wenig geändert. Gegenstand der DE-PS 24 28 770 ist die Verwendung einer festen, eine gute mechanische Widerstandsfähigkeit aufweisenden, beim Erhitzen nicht gasenden Tablette, deren Wärmeleitfähigkeit unter 0,555 cal/m s K und deren Schmelztemperatur zwischen 1573 K und 1873 K liegt, als selbstöffnender Verschluß für das Abflußloch eines Tiegels zum aluminothermischen Schmelzschweißen. Vorzugsweise wird die Verwendung einer

- 3 -                                    0090270

Tablette aus Asbestpappe mit einem Gehalt von 98% bis
99% an Asbest in Form von Chrysotilfasern kanadischen
Ursprungs, einer Dichte um 1.04, einer Zugfestigkeit
von 0.7 kp/mm², einer Schmelztemperatur von 1723 K und
einem Abbrandverlust von ungefähr 15% beansprucht. Auch
bei dieser Patentschrift besteht somit der Verschluß
der Öffnung des Gießtiegels aus einer seit der Jahrhundertwende bekannten Asbestscheibe. Die angegebene Obergrenze für die Wärmeleitfähigkeit von 0.555 cal/m s K
bringt kein zusätzliches Auswahlkriterium, da jedes anorganische Dämm-Material eine Wärmeleitfähigkeit aufweist, die unter dieser Größenordnung liegt. Die Schmelztemperatur von 1573 K und 1873 K (= 1300 und 1600°C) entspricht dem Schmelzbereich des seit Beginn der Aluminothermie als Abdichtungsmaterial verwendeten Asbestes.

Ein selbstöffnender Tiegelverschluß, wie er in der DE-PS
24 28 770 beschrieben ist, kann aber aus mehreren Gründen
nicht immer voll befriedigen.

Ein Grund ist die dem Stand der Technik entsprechende Verwendung von Asbest als Dichtungsmaterial. Gesundheitliche
Risiken sowohl bei der Herstellung der Dichtungsscheibe
als auch bei der Verwendung der Dichtungsscheibe, insbesondere in Verbindung mit den hohen Temperaturen der aluminothermischen Reaktion, sind allgemein bekannt.

Ein weiterer Nachteil der beanspruchten Dichtungsscheibe
besteht in ihrem relativ niedrigen Schmelzbereich. Hierdurch besteht die Gefahr eines zu frühen Durchschmelzens
der etwa 2500°C heißen Metallschmelze. Es ist deshalb notwendig, relativ dicke Asbestscheiben als Dichtungsmaterialien
zu verwenden. Hinzu kommt, daß bei den modernen Schweißverfahren, insbesondere bei den Verfahren zur Verbindungsschweißung von Schienen, der Trend zu aluminothermischen
Reaktionen unter Erzeugung noch höherer Temperaturen geht.

Ein weiterer Nachteil besteht darin, daß bei dem in der
DE-PS 24 28 770 beschriebenen selbstöffnenden Verschluß

- 4 -                                    0090270

die Asbestscheibe in direktem Kontakt mit dem reagierenden aluminothermischen Gemisch steht. Bei der Reaktion des aluminothermischen Gemisches bilden sich in der Masse starke Strömungen, z.B. Konvektionsströmungen, aus, die das flüssige Reaktionsgut insbesondere während der Reaktion zum heftigen Aufwallen und Brodeln bringen. Die abdichtende Asbestscheibe wird also nicht nur thermisch, sondern durch die starken Strömungen auch mechanisch beansprucht, und es werden in unkontrollierbarer Weise Anteile der Dichtungsscheibe mechanisch abgelöst und fortgespült, was unmittelbar eine Verringerung der Zeitspanne bis zum Öffnen des Verschlusses zur Folge hat.

Der Erfindung liegt die Aufgabe zugrunde, einen selbstöffnenden Verschluß zu schaffen, bei dem die Öffnungszeit in einfacher Weise vorbestimmt und reproduzierbar eingehalten werden kann, wobei Materialien zum Abdichten verwendet werden sollen, die eine gesundheitliche Schädigung des Schweißpersonals ausschließen. Die geschilderten Nachteile der selbstöffnenden Verschlüsse nach dem Stand der Technik sollen dabei vermieden werden, ohne daß aber zusätzliche Kosten das Schweißverfahren verteuern.

Die Lösung dieser Aufgabe gelingt erfindungsgemäß mit einem selbstöffnenden Verschluß, der aus einer oder mehreren Dichtungsscheibe(n) 2 aus faserigem Aluminiumsilikat besteht, wobei das Verhältnis der Gesamtdicke der Dichtungsscheibe(n) 2 zu ihrem Durchmesser 1:5 bis 1:1 beträgt, der Schmelzpunkt des Aluminiumsilikats $\geq$ 1650°C ist und auf der (den) Dichtungsscheibe(n) 2 eine Metallplatte 1 einer Dicke von 0.1 bis 3 mm angeordnet ist.

Ein wesentliches Merkmal des Verschlusses besteht aus dem zur Abdichtung verwendeten Material. Es handelt sich hierbei um ein faseriges Aluminiumsilikat, welches mit Hilfe keramischer Bindemittel zu einem vlies- oder papierähnlichen Material verfestigt ist. Ähnlich wie bei der Herstellung von mehrlagigen Papieren, werden mehrere Schichten dieser Wirrlagen der Aluminiumsilikatfasern miteinander vereinigt, so daß kartonähnliche Produkte beliebiger und vorgegebener Dicke hergestellt werden können. Dieses Material ist im Handel erhältlich, wobei sich die handelsüblichen Typen durch ihre Schmelzpunkte unterscheiden. Erfindungsgemäß soll ein Material verwendet werden, welches einen Schmelzpunkt von $\geq$ 1650°C aufweist. Besonders bevorzugt ist ein Material, dessen Schmelzpunkt 1700°C $\pm$ 20°C ist. Ein solches Material ist beispielsweise unter dem Handelsnamen "Nefalit 16" (Hersteller B.V. Nefabas) im Handel verfügbar.

Die Dicke der Dichtungsscheibe soll in einem bestimmten Verhältnis zu ihrem Durchmesser stehen. Der Quotient aus Dicke zu Durchmesser beträgt 1:5 bis 1:1, so daß bei einem Scheibendurchmesser von 20 mm die Mindestdicke 4 mm beträgt. Die Zeit für die Öffnung des Verschlusses läßt sich durch die gewählte Dicke der Dichtungsscheibe steuern. Ebenso kann die Dicke der Dichtungsscheibe der Reaktionswärme des jeweils verwendeten aluminothermischen Gemisches angepaßt werden. Dabei hat es sich als besonders vorteilhaft erwiesen, anstelle einer einzigen Scheibe der gewünschten Dicke mehrere entsprechend dünnere Scheiben aufeinander zu legen, deren Gesamtdicke der gewünschten Dicke entspricht. Überraschenderweise hat sich gezeigt, daß durch eine Mehrzahl solcher Scheiben die Reproduzierbarkeit der Tiegelabstichzeit gegenüber nur einer Scheibe erhöht wird.

Auf diese Dichtungsscheibe oder auf eine Mehrzahl von Dichtungsscheiben wird nun eine Metallplatte gelegt, die aber nun nicht mehr, wie bei dem Stand der Technik, eine mechanisch tragende Funktion hat, sondern nur dazu dient zu verhindern, daß die brodelnde Reaktionsmasse die oberste Dichtungsscheibe mechanisch abträgt. Die Metallplatte hat zweierlei Funktion: Einerseits schützt sie die Oberseite der oberen Dichtungsscheibe vor mechanischer Beanspruchung, andererseits verteilt sie die auf die Dichtungsscheibe einwirkende Wärme durch ihre hohe Wärmeleitfähigkeit gleichmäßig auf die gesamte Fläche der Dichtungsscheibe. Es ist deshalb von Bedeutung, da zu Beginn der Reaktion, die sich von einem Punkt ausgehend durch das ganze Reaktionsgemisch ausbreitet, lokale Überhitzungen auftreten können. Die Metallplatte schmilzt natürlich im Verlauf der aluminothermischen Reaktion in der Metallschmelze. Bis zum Aufschmelzen reicht die Zeit jedoch aus, um die darunterliegende Dichtungsscheibe in der vorgenannten Art zu schützen.

Die Metallplatte besteht im normalen Falle aus Eisen oder Stahl. Sie kann jedoch auch aus einem spezifisch leichteren Metall, z.B. Aluminium, bestehen, wobei jedoch durch eine geeignete mechanische Befestigung dafür gesorgt werden muß, daß die Metallplatte nicht aufschwimmt. Es hat sich in manchen Fällen auch als günstig erwiesen, die Metallplatte z.B. aus einer Eisenmangan- oder Eisenchromlegierung herzustellen, da es auf diese Weise sehr einfach möglich ist, den aluminothermisch erzeugten Stahl mit eigenschaftsbeeinflussenden metallischen Zusätzen zu legieren.

In einer bevorzugten Ausführungsform ist der selbstöffnende Verschluß in dem Auslaufkanal 7 einer in dem Gießtiegel 5 eingesetzten und austauschbaren Auslaufdüse 4 angeordnet. Der aus einer oder mehreren Dichtungsscheiben und einer darüber angeordneten Metallplatte bestehende selbstöffnende Verschluß kann dabei in eine entsprechende Ausnehmung der Auslaufdüse eingelegt werden. Dabei ist es möglich, diesen aus mehreren Einzelteilen bestehenden Verschluß mit einer Metallfolie oder einer Kunststoffolie zu umhüllen, um ihn besser verpacken und handhaben zu können.

Bei einer weiteren bevorzugten Ausführungsform ist der selbstöffnende Verschluß im unteren Bereich einer Hülse 6 angeordnet, die in die Auslaufdüse 4 einsteckbar ausgebildet ist. Diese Hülse kann in an sich bekannter Weise mit aluminothermischer Reaktionsmasse gefüllt werden. Dabei ist es gleichgültig, ob das Ende der in den Gießtiegel ragenden Hülse offen oder wie z.B. in der DE-OS 24 28 770 geschlossen ist.

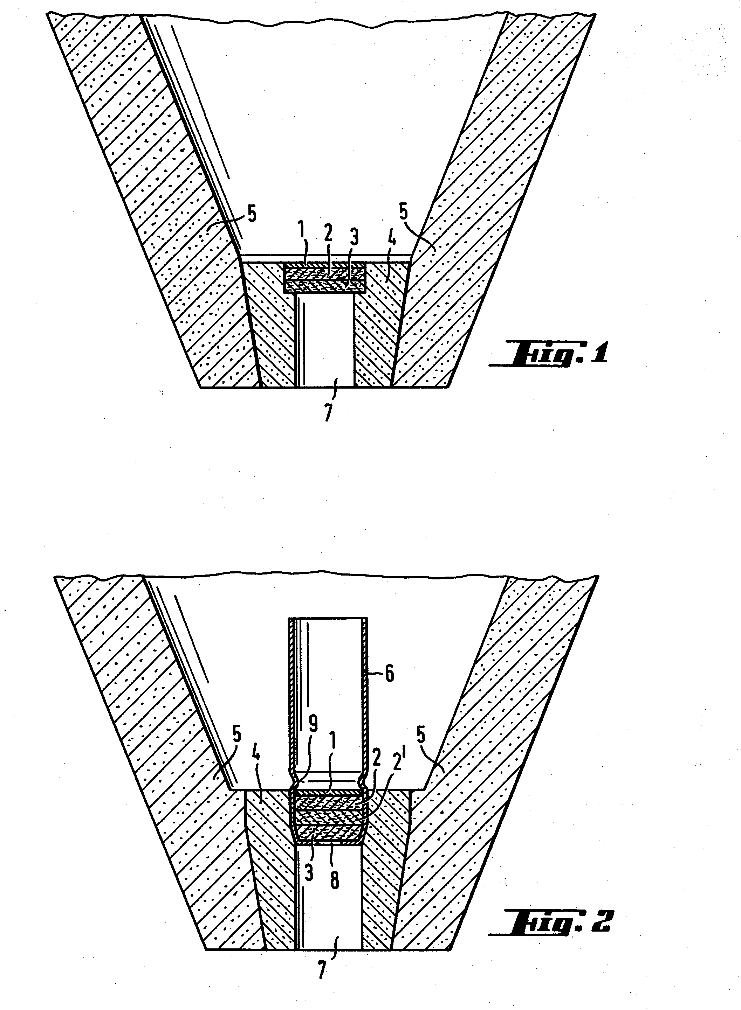

Der erfindungsgemäße selbstöffnende Verschluß soll anhand der Figuren 1 und 2 noch näher erläutert werden. Dabei zeigen die beiden Figuren einen senkrecht verlaufenden, mittig durch den unteren Bereich des Gießtiegels gelegten Schnitt.

In Figur 1 ist der untere Bereich des Gießtiegels mit 5 bezeichnet. In diesen Gießtiegel ist eine konische Auslaufdüse 4 eingesetzt, welche einen zentralen Auslaufkanal 7 aufweist. In der Auslaufdüse 4 ist im oberen Bereich eine ringförmige Ausnehmung ausgearbeitet. Auf der dabei gebildeten Ringschulter liegen die Dichtungsscheiben 2 und 3 auf. Auf der oberen Dichtungsscheibe 2 ist eine Metallplatte 1 angeordnet.

In Figur 2 ist der Gießtiegel wiederum mit 5, die Auslaufdüse mit 4 bezeichnet. In eine entsprechende Ausnehmung der Auslaufdüse 4 ist eine Hülse 6 eingesteckt, welche einen Boden aufweist, der jedoch zweckmäßig eine zentrale Öffnung 8 aufweist. Auf diesem Ringboden liegen die Dichtungsscheiben 2, 2' und 3 auf. Oberhalb der Dichtungsscheiben ist die Metallplatte 1 angeordnet. Um ein Herausfallen der Dichtungsscheiben zu vermeiden, ist die Hülse unmittelbar oberhalb der Metallplatte 1 mit einer Ringsicke 9 versehen. Der oberhalb der Metallplatte befindliche freie Raum der Hülse kann mit aluminothermischem Gemisch gefüllt sein. In diesem Falle empfiehlt es sich, die Hülse durch eine Kappe zu verschließen oder die Hülse zumammenzuquetschen. Der freie Raum der Hülse 6 kann mit aluminothermischem Gemisch gefüllt werden. Zur Schonung der Auslaufdüse 4 kann nach Einsetzen der Hülse 6 der durch die Außenwand der Hülse 6, die Innenwand des Tiegels 5 und den Boden des Gießtiegels 5 bzw. der oberen Begrenzungsfläche der Auslaufdüse 4 gebildete Raum durch Sand, z.B. Schlackensand, ausgefüllt werden.

- 1 -

0090270

Patentansprüche

1. Selbstöffnender Verschluß für bei aluminothermischen Reaktionen verwendete Gießtiegel aus einem mechanisch beanspruchbaren, beim Erhitzen nicht gasenden, hochschmelzenden anorganischen Material, dadurch gekennzeichnet, daß er aus einer oder mehreren Dichtungsscheibe(n) (2) aus faserigem Aluminiumsilikat besteht, wobei das Verhältnis der Gesamtdicke der Dichtungsscheibe(n) (2) zu ihrem Durchmesser 1:5 bis 1:1 beträgt, der Schmelzpunkt des Aluminiumsilikats $\geqq$ 1650°C ist und auf der (den) Dichtungsscheibe(n) (2) eine Metallplatte (1) einer Dicke von 0.1 bis 3 mm angeordnet ist.

2. Verschluß nach Anspruch 1, dadurch gekennzeichnet, daß er in dem Auslaufkanal (7) einer in dem Gießtiegel (5) eingesetzten und austauschbaren Auslaufdüse (4) angeordnet ist.

3. Verschluß nach Anspruch 1, dadurch gekennzeichnet, daß er im unteren Bereich einer Hülse (6) angeordnet ist, die in die Auslaufdüse (4) einsteckbar ausgebildet ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-2 022 794 (ELEKTRO-THERMIT) * Seite 1, Zeilen 93-102 * | 1,2 | B 23 K 23/00 |
| A | FR-A-2 234 089 (ACIERIES DE GENNEVILLIERS) * Seite 6, Zeilen 2-11 * | 1,2 | |

RECHERCHIERTE SACHGEBIETE (Int. Cl. 3)

B 23 K 23/00

Der vorliegende Recherchenbericht wurde für alle Patentansprüche erstellt.

| Recherchenort DEN HAAG | Abschlußdatum der Recherche 29-06-1983 | Prüfer HOORNAERT W. |
|---|---|---|